Europäisches Patentamt

European Patent Office

Office européen des brevets

(19)

(11) **EP 0 499 017 B1**

(12) **EUROPÄISCHE PATENTSCHRIFT**

(45) Veröffentlichungstag und Bekanntmachung des
Hinweises auf die Patenterteilung:
**15.04.1998  Patentblatt 1998/16**

(51) Int Cl.⁶: **G01N 27/26**, G01N 27/40,
G01N 27/416, G01N 21/77

(21) Anmeldenummer: **91890263.6**

(22) Anmeldetag: **04.11.1991**

(54) **Vorrichtung zur Messung der Konzentration eines Reagens**

Device for measuring the concentration of a reagent

Dispositif pour la mesure de la concentration d'un réactif

(84) Benannte Vertragsstaaten:
**DE FR GB**

(30) Priorität: **15.02.1991  AT 324/91**

(43) Veröffentlichungstag der Anmeldung:
**19.08.1992  Patentblatt 1992/34**

(73) Patentinhaber: **AVL Medical Instruments AG
8207 Schaffhausen (CH)**

(72) Erfinder: **Leiner, Marco Jean-Pierre, Dr.
A-8045 Graz (AT)**

(74) Vertreter: **Krause, Walter, Dr. Dipl.-Ing. et al
Patentanwälte Babeluk - Krause,
Mariahilfer Gürtel 39/17
1150 Wien (AT)**

(56) Entgegenhaltungen:
EP-A- 354 204          WO-A-90/04777
DE-A- 2 046 899      DE-A- 2 508 637
GB-A- 2 017 931      US-A- 4 149 949

EP 0 499 017 B1

## Beschreibung

Die Erfindung betrifft eine Vorrichtung zur Messung der Konzentration eines Reagens aus der Gruppe der in wäßriger Umgebung sauer oder basisch reagierenden Gase, sowie flüchtiger Säuren und Basen in einer flüssigen oder gasförmigen Probe, mit einem in einem Gehäuse angeordneten Probenraum und einer Einrichtung zur Bestimmung des pH-Wertes mit einem Reaktionsraum, welcher vom Probenraum durch eine ionenimpermeable, gaspermeable Membran getrennt ist.

Es ist bekannt, daß beispielsweise die Messung von $CO_2$ bzw. dessen Partialdruck ($pCO_2$) in Flüssigkeiten oder Gasen auf eine pH-Messung zurückgeführt werden kann. Dazu ist im allgemeinen ein von der Probe durch eine ionenimpermeable, gaspermeable Membran getrennter Reaktionsraum erforderlich, in welchem der pH-Wert gemessen wird, der durch den jeweiligen $pCO_2$-Wert des Meßgutes bestimmt wird. Zur Berechnung des pH-Wertes kann man folgende Gleichung verwenden:
mit:

$$pH = pK + \log \frac{cHCO_3^-}{\alpha pCO_2}$$

pK       pK-Wert der Kohlensäure mit pK = - log $K_c$
            ($K_c$ = Dissoziationskonstante)
$\alpha$         Dissoziationsgrad von $CO_2$
$CHCO_3^-$    Konzentration der $HCO_3^-$ -Ionen

In ähnlicher Weise kann der pH-Wert im Reaktionsraum durch $SO_2$ verändert werden. pH-Änderungen treten auch auf, wenn z.B. eine flüchtige, elektrisch neutrale Säure (z.B. Essigsäure) oder Base (z.B. Ammoniak) durch die gaspermeable Membran in den Reaktionsraum gelangt.

Dabei muß gewährleistet sein, daß der pH-Wert des Reaktionsraumes durch den aktuellen pH-Wert der zu messenden Probe nicht beeinflußt wird, wohl aber ein Gasaustausch zwischen Probe und Reaktionsraum ermöglicht wird.

Es ist weiters bekannt, daß die Detektion des pH-Wertes mit unterschiedlichen Einrichtungen erfolgen kann, z.B. auf optischem Weg mit pH-abhängigen Fluoreszenzfarbstoffen, pH-abhängigen Absorptionsfarbstoffen, oder pH-abhängigen Polymeren (z.B. Polyanilin), oder potentiometrisch mit ionenselektiven Glaselektroden über eine elektrochemische Meßkette oder mit ionensensitiven bzw. ionenselektiven Feldeffekttransistoren (ISFET), wobei das Ausmaß des pH-abhängigen Potentialsprunges den Drain-Source-Strom beeinflußt. Als weitere Einrichtungen zur pH-Messung wären noch pH-sensitive Festkörpersysteme (z.B. Edelmetall/Edelmetalloxydsysteme) Redoxsysteme (Chinhydronelektrode) oder die Antimonelektrode zu erwähnen.

Eine Vorrichtung der eingangs genannten Art ist z. B. aus der AT-PS 390 517 bekannt. Der dort beschriebene $CO_2$-Sensor besteht aus einer optisch durchlässigen Trägerschicht, einer pH-sensitiven Indikatorschicht, einer optisch durchlässigen sowie einer optisch undurchlässigen Hydrogelschicht und einer probenseitig angebrachten $CO_2$-permeablen, ionenimpermeablen Membran. Die Hydrogelschichten sind mit einer Pufferlösung getränkt. Auf diese Art kann der $CO_2$-Partialdruck über die Änderung des pH-Wertes der an der Indikatorschicht anliegenden Hydrogelschicht gemessen werden.

Der pH-Wert des Reaktionsraumes ist abhängig von $pCO_2$ der Probe, von der Temperatur und von der Konzentration der Pufferlösung im Reaktionsraum. Bei gegebener Temperatur und Konzentration der Pufferlösung ist der pH-Wert des Reaktionsraumes nur mehr abhängig vom $pCO_2$ der Probe.

Da die gaspermeable, ionenimpermeable Membran auch Wasser durch isotherme Destillation durchläßt, erfolgt neben dem Gasaustausch zwischen Probenraum und Reaktionsraum auch ein Austausch von Wasser, wodurch sich die Konzentration der Pufferlösung ändert. Dieser nachteilige Effekt tritt immer dann ein, wenn die Pufferlösung im Reaktionsraum einen anderen Dampfdruck als das Lagermedium bzw. die Probe im Probenraum besitzt.

Der Austauschprozeß kommt erst dann in einen Gleichgewichtszustand, wenn der osmotische Druck in beiden Räumen den gleichen Wert angenommen hat. Die Geschwindigkeit des Austauschprozesses ist abhängig von der Art und der Dicke des verwendeten Materials. Um eine langzeitstabile Meßanordnung zu erhalten bzw. ein Austrocknen des Reaktionsraumes zu verhindern, ist es daher erforderlich, den Probenraum vor der Messung mit einem Lagermedium zu füllen, welches den gleichen osmotischen Druck wie das Medium im Reaktionsraum besitzt.

Ähnliche Schwierigkeiten ergeben sich auch bei der aus der DE-PS 25 08 637 bekannten Anordnung, in welcher ein flacher Indikatorraum durch eine selektiv für die zu messenden Blutbestandteile durchlässigen Membran vom Meßgut getrennt ist. Die pH-Messung erfolgt auf optischem Wege mittels eines pH-abhängigen Fluoreszenzindikators.

Weiters ist es aus der EP-A 0 105 870 bekannt, daß der Reaktionsraum in Form von wäßrigen Tröpfchen bzw. hygroskopischen Platzhaltermaterialien in gleichmäßiger Verteilung in einer gaspermeablen Polymermembran vorliegen kann. Die Messung des pH-Wertes erfolgt über einen in den Tröpfchen bzw. Platzhaltermaterialien enthaltenen, pH-abhängigen Fluoreszenzindikator.

Es hat sich nun gezeigt, daß bei miniaturisierten Meßvorrichtungen dieser Art die Befüllung des Reaktionsraumes mit einer Pufferlösung definierter Salzzusammensetzung bzw. die Konstanthaltung der Konzentration der Pufferlösung verfahrenstechnisch sehr aufwendig ist. Prinzipiell ist es zwar möglich, zuerst die Puffersalze vor der Herstellung der ionenimpermeablen Schicht in die den Reaktionsraum bildende Hydrogelschicht durch Eintauchen der Folie in eine Pufferlösung und anschliessende Trocknung einzubringen. Das Wasser kann dann nach dem Einbau des Elementes durch Befüllen des Probenraumes mit einer isoosmotischen Pufferlösung und isothermer Destillation in den Reaktionsraum eingebracht werden. Es hat sich jedoch gezeigt, daß die Befüllung des Reaktionsraumes mit Wasser auf diese Art relativ langsam erfolgt und die Reproduzierbarkeit einer derartigen Befüllung sehr hohe Anforderungen an den Fertigungsprozeß stellt.

Aufgabe der Erfindung ist es nun, eine Vorrichtung der eingangs genannten Art derart weiterzubilden, daß eine schnelle und reproduzierbare Befüllung des Reaktionsraumes mit einer Pufferlösung gewährleistet ist, wobei auch die Konzentration der Pufferlösung bis zur Messung bzw. zwischen den einzelnen Messungen möglichst konstant bleiben soll.

Diese Aufgabe wird erfindungsgemäß dadurch gelöst, daß der Probenraum als Reservoir für eine Pufferlösung fungiert und daß ein ionenpermeabler Kanal vorgesehen ist, welcher kapillar ausgebildet oder mit einem ionenpermeablen Material gefüllt ist und unter Umgehung der ionenimpermeablen, gaspermeablen Membran den Reaktionsraum mit dem Probenraum verbindet.

Durch die Verbindung des Reaktionsraumes mit einem die Pufferlösung enthaltenden Reservoir, ist einerseits für eine rasche und einfach zu bewerkstelligende Befüllung des Reaktionsraumes gesorgt, wobei durch die Verbindung zum Reservoir auch ein Austrocknen des Reaktionsraumes wirksam verhindert werden kann. Vorteilhafterweise wird dabei der Probenraum gleichzeitig als Reservoir für die Pufferlösung genutzt. Der ionenpermeable Kanal ist so ausgeführt, daß innerhalb der relativ kurzen Meßzeit die Protonen des Meßgutes nicht in den Reaktionsraum gelangen können, jedoch während der Lagerung bzw. zwischen den Messungen sehr wohl ein Ionenaustausch zwischen dem als Reservoir genützten Probenraum und dem Reaktionsraum stattfinden kann. Die Diffusionszeiten können durch die Kanalführung bzw. durch die Füllung des ionenpermeablen Kanals mit ionenpermeablem Material, entsprechend vergrößert werden.

Bei Verwendung optischer Sensoren ist es von Vorteil, wenn sich im Reaktionsraum eine von der ionenimpermeablen, gaspermeablen Membran bedeckte Indikatorschicht befindet, welche der ionenpermeable Kanal kontaktiert.

Eine besonders vorteilhafte Ausführungsvariante zeichnet sich dadurch aus, daß ein aus einer Trägerschicht, der Indikatorschicht und der ionenimpermeablen, gaspermeablen Membran bestehender Sensor in eine Vertiefung des Unterteiles eines zweiteiligen Gehäuses eingeklebt, eingeprägt oder eingeklemmt ist, wobei eine seitliche Ausnehmung der Vertiefung den ionenpermeablen Kanal bildet und die Indikatorschicht seitlich kontaktiert. Für die Fertigung einer Vielzahl gleichartiger Meßvorrichtungen ist es von Vorteil, wenn zuerst die den Reaktionsraum bildende Indikatorschicht und die gaspermeable, ionenimpermeable Schicht großflächig auf eine Polymerfolie als Trägerschicht aufgebracht werden, eine Vielzahl gleichartiger Elemente aus der Polymerfolie ausgestanzt werden und diese durch Prägen, Klemmen oder Kleben in einer entsprechend geformten Vertiefung eines kanalförmigen Unterteiles des zweiteiligen Gehäuses befestigt werden.

In einer weiteren Ausführungsvariante der Erfindung ist vorgesehen, daß der Probenraum mit einem separaten Probenzu- sowie Probenablauf ausgestattet ist, wobei der Probenzu- oder der Probenablauf eine Abzweigung aufweist, über welche dem Probenraum eine Pufferlösung zuführbar ist, wobei der vom Reaktionsraum ausgehende ionenpermeable Kanal in diese Abzweigung mündet. Diese Meßvorrichtung kann besonders vorteilhaft für Mehrfachmessungen eingesetzt werden, da das Meßgut nicht in den Reaktionsraum gelangen kann.

Schließlich ist es erfindungsgemäß möglich, daß in der Pufferlösung das Indikatormaterial der Indikatorschicht gelöst vorliegt.

Die Erfindung wird im folgenden anhand von Zeichnungen näher erläutert.

Es zeigen:

Fig. 1    eine erfindungsgemäße Vorrichtung geschnitten nach der Linie I-I in Fig. 2,

Fig. 2    einen Schnitt nach der Linie II-II in Fig. 1, die Fig. 3, 4 bzw. 5, 6 Ausführungsvarianten nach Fig. 1 in einer Fig. 1 bzw. Fig. 2 entsprechenden Schnittdarstellung sowie die

Fig. 7    eine weitere Ausführungsvariante der Erfindung.

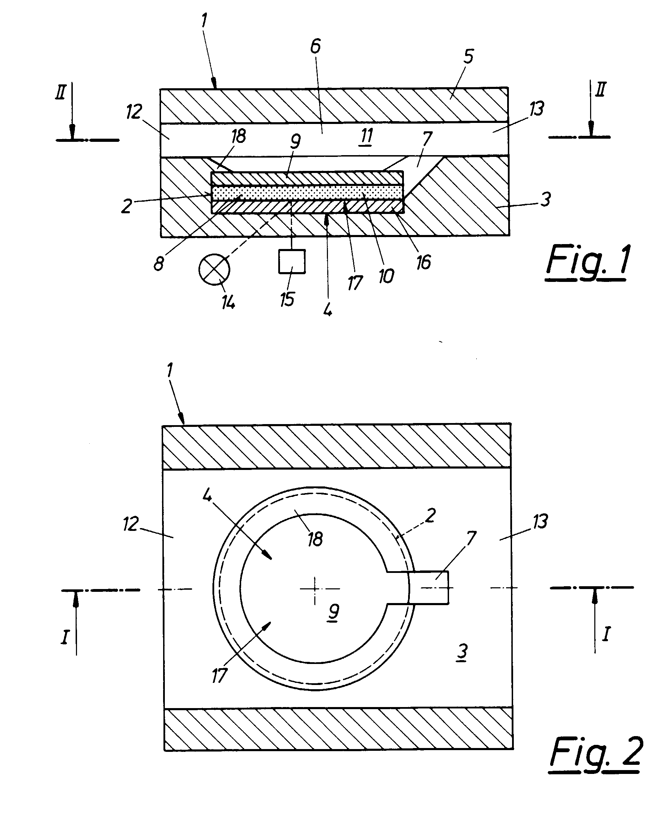

Die in Fig. 1 und 2 dargestellte Vorrichtung zur Messung der Konzentration eines Reagens, z.B. des $pCO_2$ in einer flüssigen Probe, weist ein zweiteiliges Gehäuse 1 auf, welches in einer Vertiefung 2 des Unterteiles 3 den Sensor 17 einer Einrichtung 4 zur Bestimmung des pH-Wertes aufnimmt. Im Oberteil 5 des Gehäuses 1 ist ein Probenraum 6 ausgebildet, welcher über einen ionenpermeablen Kanal 7 mit dem Reaktionsraum 8 in Verbindung steht. In der dargestellten Ausführungsvariante befindet sich im Reaktionsraum 8 eine von einer ionenimpermeablen, gaspermeablen Membran 9 bedeckte Indikatorschicht 10, welche der ionenpermeable Kanal 7 seitlich kontaktiert. Der Probenraum dient hier gleichzeitig als Reservoir 11 für die Pufferlösung, wobei der ionenpermeable Kanal 7 unter Umgehung der ionenimpermeablen Membran 9 den Reaktionsraum 8 mit dem Probenraum 6 verbindet. Der Reaktionsraum kann über den Probenzulauf 12 oder über den Probenablauf 13 mittels Kanal 7 einfach mit Pufferlösung gefüllt werden, wobei gleichzeitig dem Probenraum Pufferlösung zugeführt wird und dieser während der Lagerung der Meßvorrichtung bzw. zwischen zwei Messungen als Reservoir 11 dient.

Bei der eigentlichen Messung gelangt die Probe über den Probenzulauf 12 in die Vorrichtung und verdrängt die Pufferlösung aus deni Probenraum 6. Ein Kontakt der Probe mit dem Reaktionsraum 8 bzw. der Indikatorschicht 10 wird für die kurze Meßzeit dadurch verhindert, daß der Kanal 7 kapillar ausgebildet, oder mit einem ionenpermeablen Material gefüllt ist, wodurch die Diffusionszeit für Ionen verlängert. Während der Lagerung bzw. zwischen den einzelnen Messungen ist die Zeitspanne jedoch groß genug, um einen Ionenaustausch zwischen Reservoir 11 und Reaktionsraum 8 zuzulassen.

Die aus Lichtquelle 14 und Detektor 15 bestehende Meßeinrichtung ist nur schematisch angedeutet, wobei darauf hingewiesen wird, daß auch andere in der Beschreibungseinleitung erwähnte Einrichtungen zur Messung des pH-Wertes mit einem entsprechenden Reaktionsraum verwendet werden können.

Bei der in den Fig. 1 und 2 beschriebenen Vorrichtung bilden eine Trägerschicht 16, die Indikatorschicht 10 und die ionenimpermeable, gaspermeable Membran 9 den Sensor 17, welcher durch eine Prägung 18 im Unterteil 3 des Gehäuses 1 festgehalten wird.

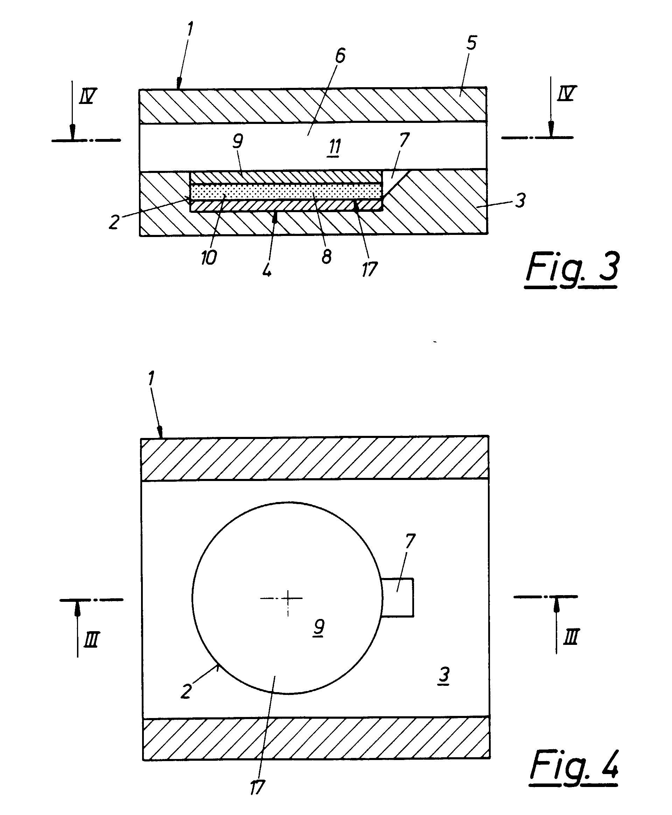

Die Ausführungen nach den Fig. 3 und 4 bzw. 5 und 6 entsprechen bis auf Unterschiede in der Befestigung des Sensors 17 den Ausführungen nach Fig. 1 und 2.

Beispielsweise kann der Sensor 17 entsprechend Fig. 3 und 4 völlig eben in die Vertiefung 2 des Unterteiles 3 eingeklebt werden, wobei eine seitliche Ausnehmung der Vertiefung 2 den ionenpermeablen Kanal 7 bildet.

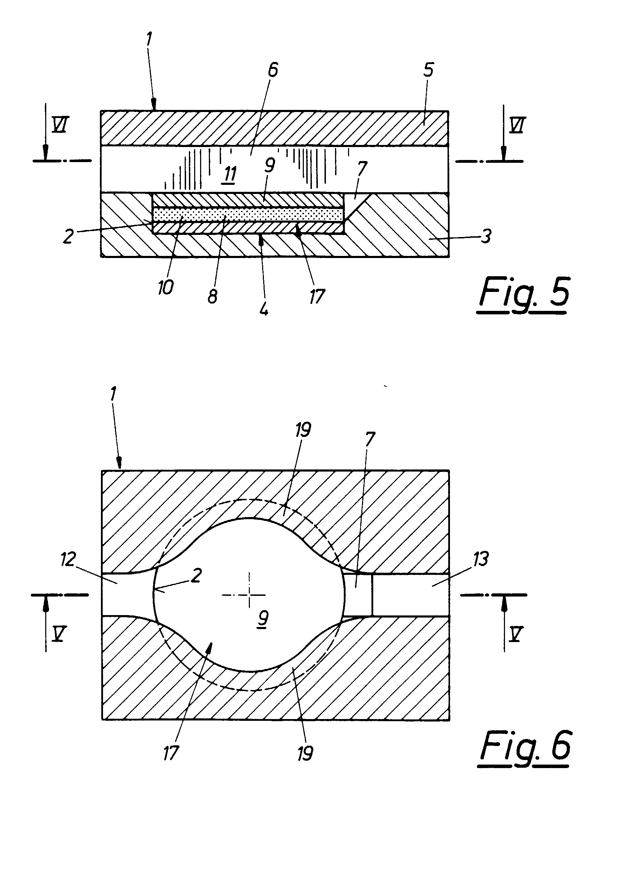

Weiters ist es entsprechend Fig. 5 und 6 möglich, den Probenraum 6 im Oberteil 5 des Gehäuses 1 mit einem kleineren Durchmesser herzustellen als die Vertiefung 2 bzw. den darin befindlichen Sensor 17. Beim Zusammenbau des Gehäuses 1 aus dem Unterteil 3 und dem Oberteil 5 wird der Sensor 17 durch die überstehenden Wandteile 19 des Oberteils 5 in seiner Lage festgehalten bzw. geklemmt.

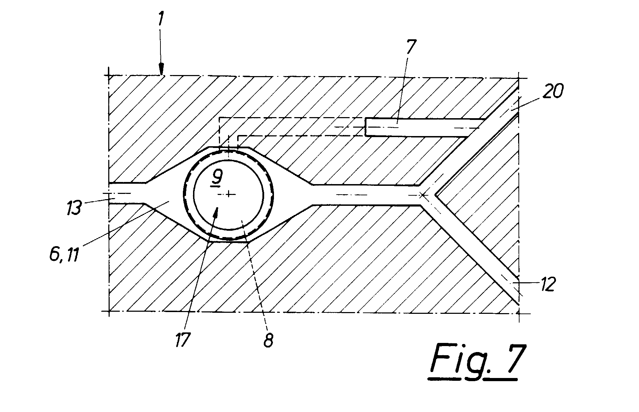

Bei der in Fig. 7 dargestellten Ausführungsvariante weist der Probenzulauf 12 eine Abzweigung 20 auf, über welche dem Probenraum 6 bzw. dem Reservoir 11 eine Pufferlösung zugeführt werden kann. Der ionenpermeable Kanal 7 mündet in diese Abzweigung 20, sodaß die Pufferlösung gleichzeitig auch in den Reaktionsraum 8 gelangen kann. Wird nun die Probe über den Probenzulauf 12 zugeführt, verhindert die in der Abzweigung 20 sowie im Kanal 7 vorliegende Pufferlösung für die relativ kurze Meßzeit ein Vordringen der Probe bzw. von Probenbestandteilen in den Reaktionsraum 8.

**Patentansprüche**

1. Vorrichtung zur Messung der Konzentration eines Reagens aus der Gruppe der in wäßriger Umgebung sauer oder basisch reagierenden Gase, sowie flüchtiger Säuren und Basen in einer flüssigen oder gasförmigen Probe, mit einem in einem Gehäuse angeordneten Probenraum (6) und einer Einrichtung (4) zur Bestimmung des pH-Wertes mit einem Reaktionsraum (8), welcher vom Probenraum (6) durch eine ionenimpermeable, gaspermeable Membran (9) getrennt ist, **dadurch gekennzeichnet,** daß der Probenraum (6) als Reservoir (11) für eine Pufferlösung fungiert und daß ein ionenpermeabler Kanal (7) vorgesehen ist, welcher kapillar ausgebildet oder mit einem ionenpermeablen Material gefüllt ist und unter Umgehung der ionenimpermeablen, gaspermeablen Membran (9) den Reaktionsraum (8) mit dem Probenraum (6) verbindet.

2. Vorrichtung nach Anspruch 1, **dadurch gekennzeichnet,** daß sich im Reaktionsraum (8) eine von der ionenimpermeablen, gaspermeablen Membran (9) bedeckte Indikatorschicht (10) befindet, welche der ionenpermeable Kanal (7) kontaktiert.

3. Vorrichtung nach Anspruch 2, **dadurch gekennzeichnet,** daß ein aus einer Trägerschicht (16), der Indikatorschicht (10) und der ionenimpermeablen, gaspermeablen Membran (9) bestehender Sensor (17) in eine Vertiefung (2) des Unterteiles (3) eines zweiteiligen Gehäuses (1) eingeklebt, eingeprägt oder eingeklemmt ist, wobei eine seitliche Ausnehmung der Vertiefung (2) den ionenpermeablen Kanal (7) bildet und die Indikatorschicht (10) seitlich kontaktiert.

4. Vorrichtung nach Anspruch 1 oder 2, **dadurch gekennzeichnet,** daß der Probenraum (6) mit einem separaten Probenzu- sowie Probenablauf (12, 13) ausgestattet ist, wobei der Probenzu- oder der Probenablauf (12, 13) eine Abzweigung (20) aufweist, über welche dem Probenraum (6) eine Pufferlösung zuführbar ist, wobei der vom Reaktionsraum (8) ausgehende ionenpermeable Kanal (7) in diese Abzweigung (20) mündet.

5. Vorrichtung nach einem der Ansprüche 2 bis 4, **dadurch gekennzeichnet,** daß das Indikatormaterial der Indikatorschicht (10) in der Pufferlösung gelöst vorliegt.

**Claims**

1. A device for determining the concentration of a reagent from the group of gases with acid or alkaline reaction in aqueous environments, and of volatile acids and bases in liquid or gaseous samples, comprising a sample chamber 6 situated in a housing, and a unit 4 for pH measurement with a reaction space 8 separated from the sample chamber 6 by an ion-impermeable, gas-permeable membrane 9, characterized in that the sample chamber 6 is used as a reservoir 11 for a buffer solution, and that an ion-permeable channel 7 is provided, which is configured as a capillary or is filled with ion-permeable material, and which links the reaction space 8 and the sample chamber 6 while bypassing the ion-impermeable, gas-permeable membrane 9.

2.  A device according to claim 1, characterized in that the reaction space 8 contains an indicator layer 10 covered by the ion-impermeable, gas-permeable membrane 9, which indicator layer 10 is in contact with the ion-permeable channel 7.

3.  A device according to claim 2, characterized in that a sensor 17 comprising a supporting layer 16, the indicator layer 10 and the ion-impermeable, gas-permeable membrane 9 is cemented or pressed or fitted into a depression 2 in the lower part 3 of a two-part housing 1, a recess on the side of the depression 2 forming the ion-permeable channel 7 in lateral contact with the indicator layer 10.

4.  A device according to claim 1 or 2, characterized in that the sample chamber 6 is provided with separate sample feeding and drainage lines 12, 13, one of which lines 12, 13 has a branchoff 20 for feeding a buffer solution into the sample chamber 6, the ion-permeable channel 7 departing from the reaction space 8 opening into this branchoff 20.

5.  A device according to any of claims 2 to 4, characterized in that the indicator substance of the indicator layer 10 is dissolved in the buffer solution.

**Revendications**

1.  Dispositif pour mesurer la concentration d'un agent chimique du groupe des gaz qui réagissent de façon acide ou basique dans un milieu aqueux, ainsi que des acides et des bases liquides dans un échantillon se présentant sous forme liquide ou gazeuse, avec une enceinte d'essai (6) disposée dans un carter et un dispositif (4) servant à déterminer la valeur du pH avec une chambre de réaction (8), qui est séparée de l'enceinte d'essai (6) par une membrane (9) imperméable aux ions, mais perméable aux gaz, caractérisé en ce que

    •   l'enceinte d'essai (6) fonctionne comme réservoir (11) pour une solution tampon et

    •   l'on prévoit un canal (7) perméable aux ions, qui est constitué de façon capillaire ou est rempli d'une matière imperméable aux ions et relie en contournant la membrane (9), imperméable aux ions, mais perméable aux gaz, la chambre de réaction (8) à l'enceinte d'essai (6).

2.  Dispositif selon la revendication 1, caractérisé en ce que dans la chambre de réaction (8) se trouve une couche indicatrice (10), recouverte par la membrane (9) imperméable aux ions, mais perméable aux gaz, couche indicatrice (10) qui vient en contact avec le canal perméable aux ions (7).

3.  Dispositif selon la revendication 2, caractérisé en ce qu'

    •   un détecteur (17), consistant en une couche support (16), la couche indicatrice (10) et la membrane (9) imperméable aux ions, perméable aux gaz,
    •   est collé, incrusté ou inséré dans un renfoncement (2) de la partie inférieure (3) d'un carter (1) en deux parties, un évidement latéral du renfoncement (2) formant le canal (7) perméable aux ions et venant en contact avec la couche indicatrice (10) latéralement.

4.  Dispositif selon la revendication 1 ou 2, caractérisé en ce que l'enceinte d'essai (6) est équipée d'une conduite d'arrivée de l'échantillon et d'une conduite d'évacuation séparées de l'échantillon (12, 13), la conduite d'arrivée de l'échantillon ou la conduite d'évacuation de l'échantillon (12, 13) présentant une dérivation (20) par laquelle on peut amener une solution tampon dans l'enceinte d'essai (6), le canal d'essai (7) perméable aux ions partant de la chambre de réaction (8) débouche dans cette dérivation (20).

5.  Dispositif selon l'une des revendications 2 à 4, caractérisé en ce que la matière indicatrice de la couche indicatrice (10) se trouve en solution dans la solution tampon.

_Fig.1_

_Fig. 2_

6

_Fig. 3_

_Fig. 4_

_Fig. 5_

_Fig. 6_

*Fig. 7*